Europäisches Patentamt

(19) **European Patent Office**

Office européen des brevets

(11) Numéro de publication: **0 017 577**
**B1**

(12) FASCICULE DE BREVET EUROPEEN

(45) Date de publication du fascicule de brevet:
06.01.82

(51) Int. Cl.³: **C 09 K 3/12,** C 09 J 3/00

(21) Numéro de dépôt: **80400428.1**

(22) Date de dépôt: **31.03.80**

(54) Produit d'étanchement à base de résine époxyde chargée et son application dans les réservoirs de carburant.

(30) Priorité: **06.04.79 FR 7908838**

(43) Date de publication de la demande:
**15.10.80 Bulletin 80/21**

(45) Mention de la délivrance du brevet:
**06.01.82 Bulletin 82/1**

(84) Etats contractants désignés:
**BE DE GB IT NL SE**

(56) Documents cités:
**DE-A-2 827 637**
**US-A-3 556 831**
**US-A-4 129 548**

(73) Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Dallemagne, Gérard Jacques Maurice, 21 avenue du Vercors, F-78450 Villepreux (FR)**
Inventeur: **Hognat, Jacques Léon Paul, 3, Allée de la Cascade, F-92500 Rueil-Malmaison (FR)**

(74) Mandataire: **Bonnetat, Christian, Cabinet PROPI Conseils 23 rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Produit d'étanchement à base de résine époxyde chargée et son application dans les réservoirs de carburant

La présente invention concerne un produit d'étanchement. Elle sera expliquée et décrite ci-après plus directement en rapport avec son application à l'étanchement des réservoirs de carburant des aéronefs, mais il va de soi qu'elle n'est pas limitée à cette application et qu'elle peut être mise en oeuvre à chaque fois que l'on a besoin d'assurer une étanchéité dans des conditions difficiles.

On sait que, lors de la construction des aéronefs, les réservoirs de carburant de ceux-ci sont étanchés, notamment au niveau des raccords de leurs parois adjacentes, par des produits durchissants ayant initialement une consistance coisine de celle d'un mastic.

Ces produits d'étanchement sont généralement des résines synthétiques et, à cause des dures conditions auxquelles ils sont soumis en vol, notamment en ce qui concerne la température, ils se craquellent, de sorte que des défauts d'étanchéité apparaissent, entraînant des fuites de carburant. Pour colmater ces fuites, on utilise des produits durcissants du type de ceux utilisés lors de la construction des aéronefs, mais les réparations ainsi effectuées n'ont qu'une durée limitée et doivent être recommencées au bout d'un nombre d'heures de vol relativement faible, même pour les aéronefs volant à vitesse subsonique. En ce qui concerne les aéronefs supersoniques, la résistance des réparations est encore plus faible.

Il en résulte un grand nombre d'inconvénients. En effet, ces fuites répétées, dues à la faible efficacité des produits d'étanchement connus utilisés, entraînent l'immobilisation fréquente d'aéronefs en exploitation, augmentant grandement les coûts d'entretien et abaissant la rentabilité de ces aéronefs. En outre, le durcissement des produits connus utilisés pour les réparations de fuites est lent (au moins 24 heures), de sorte que les immobilisations des aéronefs sont de longue durée. Par ailleurs, le colmatage de fuites avec ces produits connus nécessite souvent la vidange des réservoirs, à cause du temps de durcissement prolongé des produits et parfois le démontage desdits réservoirs, ce qui est complexe et coûteux, notamment lorsque ces réservoirs sont structuraux, c'est-à-dire incorporés à la structure des aéronefs (cas des réservoirs d'ailes). Le manque d'efficacité des produits d'étanchement connus en aéronautique est donc une cause de frais d'exploitation très importante, ainsi d'ailleurs que de risques d'incendie de l'aéronef, si elles se produisent subitement en vol, sans avoir été détectées auparavant au sol. Enfin, ces produits sont généralament toxiques, ou nécessitent d'utiliser des produits décapants toxiques lors des réparations de colmatage, de sorte que des risques d'intoxication existent pour le personnel spécialisé dans l'étanchéité de ces réservoirs.

Par ailleurs, on connaît par la demande de brevet allemand N° 2 827 637, un produit d'étanchement du type à deux composants, dont le premier est formé par un mélange d'une résine époxyde, d'une cire et d'une charge pulvérulente, alors que le second desdits composants est constitué par un mélange d'un durcisseur pour la résine époxyde, d'une cire et d'une charge inerte.

On remarquera tout d'abord que ce produit comporte une cire dans ses deux composants, ce qui en augmente le prix de revient et soulève des difficultés de mélange et d'homogénéité desdits composants. Par ailleurs, la charge inerte présente une granulométrie comprise de 5 à 100 microns, ce qui interdit l'obturation des fissures les plus minces. Enfin, les proportions de charge utilisées sont importantes, de l'ordre de 60 à 70%, ce qui augmente le temps de séchage.

La présente invention a pour objet de remédier à ces inconvénients. Elle concerne un produit d'étanchement permettant, lorsqu'il est appliqué à l'étanchéité de réservoirs de carburant d'aéronefs, d'assurer une meilleure étanchéité que les produits connus, aussi bien lors de la construction des aéronefs que lors de réparations ultérieures. De plus, il assure un colmatage rapide des fuites. Le produit selon l'invention permet donc de réduire les immobilisations d'aéronefs en exploitation et les coûts d'entretien et d'exploitation, d'une part parce que les étanchéités durent plus longtemps, d'autre part parce que les réparations sont rapides. Il augmente également la sécurité du personnel, car il est non toxique.

A cette fin, selon l'invention, le produit d'étanchement du type à deux composants, dont le premier est formé par le mélange intime d'une résine époxyde et d'une charge pulvérulente inerte et le second par le mélange intime d'un durcisseur pour ladite résine époxyde et d'une charge pulvérulente inerte, est remarquable en ce que, dans les deux composants, la charge pulvérulente inerte est constituée par de la silice colloïdale sèche, en ce que, dans le premier composant, la proportion pondérale de charge pulvérulente rapportée à la résine époxyde est comprise entre 5 et 20%, et en ce que, dans le second composant, la proportion pondérale de charge pulvérulente rapportée au durcisseur, est comprise entre 3 et 30%.

Ainse, dans le produit d'étanchement selon l'invention, non seulement on n'utilise pas de cire, mais encore, du fait de la très faible granulométrie de la silice colloïdale, on peut obtenir un colmatage de micro-fissures avec une meilleure stabilité dans le temps qu'à l'aide d'une cire. De plus, la silice colloïdale est très facile à mélanger aux autres ingrédients, ce qui n'est pas le cas de la cire. Enfin, les proportions de charge sont bien déterminées dans chacun des composants.

Ainsi, grâce à l'invention, on obtient un produit d'étanchement à séchage rapide (de l'ordre de quelques minutes) ne nécessitant donc pas obligatoirement la vidange d'un réservoir à réparer et présentant une longue résistance, même aux conditions de vol supersonique.

On peut ajouter au premier composant une proportion pondérale d'un flexibilisant qui, rapportée à la résine époxyde, est au plus égale à 15%.

Des résultats satisfaisants ont été obtenus lorsque la résine époxyde est formée par le produit commercial connu sous le nom de RUTAPOX VE 2511 - Partie A, tandis que le durcisseur est le produit connu sous le nom commercial de RUTAPOX VE 2511 - Partie B. Ces produits sont farbriqués par la société BAKELITE GmbH et sont respectivement constitués par du diglycidyl-éther de bisphénol et un mercaptan modifié.

Dans un exemple de composition particulièrement intéresant, le premier composant comporte 2 grammes de flexibilisant et 2,5 grammes de silice colloïdale sèche, pour 25 grammes de résine époxyde et le second composant comporte 1,5 ou 3 grammes (selon la viscosité désirée) de silice colloïdale sèche, pour 25 grammes de durcisseur.

Dans le cas de réparations de fuites importantes, il peut être intéressant d'utiliser le produit selon l'invention en coopération avec un tissu, par exemple de fibres de verre, susceptible d'obturer au moins partiellement l'orifice de fuite.

### Exemple I

Cet exemple concerne des réparations extérieures effectuées sur des réservoirs structuraux d'un avion supersonique après constatation de faibles fuites de curburant, entre deux parties sensiblement coplanaires.

Aux emplacements des fuites, les parois des réservoirs sont grattées et poncées jusqu'à la couche primaire de la peinture des tôles, de façon à éliminer toute trace de corps étrangers et notamment d'ancien mastic d'étanchement. Les zones poncées sont dégraissées, par exemple à l'aide de trichloroéthane. Ensuite ces zones sont séchées à l'air comprimé pendant quelques secondes; éventuellement, en cas de fuites de carburant importantes, ces fuites sont refoulées à l'intérieur du réservoir par l'utilisation d'un jet d'air comprimé.

Par ailleurs, on prépare les compositions suivantes:

— dans un primier pot, on verse 25 grammes d'une résine époxyde connue commercialement sous le nom de RUTAPOX VE 2511 - Partie A. A cette résine, on ajoute 2 grammes d'un flexibilisant portant le nom commercial de RUTAPOX 0256 (fabriqué par le société BAKELITE GmbH et constitué de polyglycol époxydé) et 2,5 grammes de silice colloïdale sèche.

Le contenu de ce premier pot est malaxé, jusqu'à obtenir le mélange intime de ses composants.

— dans un second pot, on verse 25 grammes du durcisseur connu commercialement sous le nom de RUTAPOX VE 2511 - Partie B et on y ajoute 1,5 gramme de silice colloïdale sèche, semblable à celle mentionnée ci-dessus.

Le contenu de ce second pot est malaxé jusqu'à obtenir un mélange intime.

Ensuite, dans chacun des premier et second pots, on prélève des fractions égales des compositions qu'ils contiennent et on mélange intimement ces prélèvements dans un troisième pot. Le contenu de ce troisième pot est appliqué, à la spatule et en couche, sur une ou plusieurs zones préparées de la façon décrite ci-dessus. Ensuite, on prélève de nouveau des quantités pondérales égales des compositions contenues dans les premier et second pots et on les mélange intimement, après quoi on les applique sur d'autres zones à colmater. L'opération est renouvelée jusqu'à ce que toutes ces zones soient enduites.

Cinq minutes environ après l'enduction de chaque zone, le revêtement correspondant est complètement durci.

Après 150 heures de vol supersonique, les zones ainsi colmatées ne présentent aucune trace de nouvelle fuite.

### Exemple II

L'exemple II est ralatif à des réparations extérieures effectuées sur des réservoirs structuraux d'un avion supersonique, après constatation de faibles fuites de carburant entre deux parties sensiblement orthogonales.

Les zones correspondant aux emplacements des fuites sont préparées de la façon décrite dans l'exemple I. Par ailleurs, dans un premier pot, on prépare une composition semblable à celle du premier pot de cet exemple I.

Dans un second pot, on verse 25 grammes du durcisseur RUTAPOX VE 2511 - Partie B et on y ajoute 3 grammes de silice colloïdale sèche.

Ensuite, par prélèvement et mélange de fractions égales des compositions contenues dans les premier et second pots, on obtient un produit de colmatage de fuite, appliqué à la spatule sous la forme d'un cordon sur des zones à colmater.

Cinq minutes environ après la formation de chaque cordon, celui-ci est complètement durci.

Après 150 heures de vol supersonique, les cordons de colmatage ne présentaient aucune trace de nouvelle fuite.

### Exemple III

L'exemple III est relatif à des réparations intérieures effectuées sur des réservoirs structuraux d'un avion supersonique, après constatation de faibles fuites de carburant entre deux parties sensiblement coplanaires.

Aux emplacements des fuites, les parois des réservoirs sont grattées et poncées jusqu'à la couche primaire de la peinture des tôles, de façon à éliminer toute trace de corps étrangers et notamment d'ancien mastic d'étanchement. La fuite de carburant est éventuellement repoussée à l'aide d'air comprimé et les zones poncées subissent un nettoyage primaire au chorothène, puis un nettoyage secondaire à la méthyléthylcétone, après quoi elles sont séchées à l'air comprimé.

Ensuite, on prépare des compositions semblables à celles de l'exemple I et on les applique de manière identique.

Après 150 heures de vol, les réservoirs ainsi réparés ne présentaient aucune trace de nouvelle fuite.

Exemple IV

Cet exemple concerne la réparation extérieure provisoire effectuée sur un réservoir structural d'un avion supersonique, après constatation d'une fuite importante de carburant (supérieure à 2 gouttes/minute), à la suite d'un choc avec un corps étranger (pierre, oiseau, etc.).

La zone entourant l'orifice de la fuite est préparée de la façon indiquée dans l'exemple I on prépare des compositions identiques à celles décrites dans celui-ci.

Ensuite, sur l'orifice de fuite, on applique un tissu de fibres de verre, de façon à entièrement recouvrir ledit orifice, mais à laisser subsister, autour de ce tissu, une zone périphérique de tôles préparée. Puis, sur ledit tissu et sur cette zone périphérique, on applique à la spatule un mélange équipondéral des compositions des premier et second pots.

Sept minutes après l'application, le mélange équipondéral est complètement solidifié, rigidifiant ledit tissu de fibres de verre. Grâce à cette réparation provisoire, l'avion supersonique a pu effectuer un vol de douze heures, sans apparition de fuite nouvelle du carburant.

**Revendications**

1. Produit d'étanchement, du type à deux composants, dont le premier est formé par le mélange intime d'une résine époxyde et d'une charge pulvérulente inerte et le second par le mélange intime d'un durcisseur pour ladite résine époxyde et d'une charge pulvérulente inerte, caractérisé en ce que, dans les deux composants, la charge pulvérulente inerte est constituée par de la silice colloïdale sèche, en ce que, dans le premier composant, la proportion pondérale de charge pulvérulente rapportée à la résine époxyde est comprise entre 5 et 20%, et en ce que, dans le second composant, la proportion pondérale de charge pulvérulente,

rapportée au durcisseur, est comprise entre 3 et 30%.

2. Produit d'étanchement selon la revendication 1, caractérisé en ce que la résine époxyde est formée par du diglycidyl-éther de bisphénol tandis que le durcisseur est un mercaptan modifié.

3. Produit d'étanchement selon la revendication 2, caractérisé en ce que le premier composant vomporte 2,5 grammes de silice colloïdale sèche pour 25 grammes de résine époxyde et en ce que le second composant comporte 1,5 gramme de silice colloïdale sèche pour 25 grammes de durcisseur.

4. Produit d'étanchement selon la revendication 2, caractérisé en ce que le premier composant comporte 2,5 grammes de silice colloidale sèche pour 25 grammes de résine époxyde et en ce que le second composant comporte 3 grammes de silice colloïdale sèche pour 25 grammes de durcisseur.

5. Produit d'tanchement selon l'une quelconque des revendications 3 ou 4, caractérisé en ce que le premier composant comporte de plus 2 grammes de flexibilisant.

6. Application du produit selon l'une quelconque des revendications 1 à 5 à l'étanchement des réservoirs de carburant pour aéronef, cet étanchement étant effectué lors de la construction dudit aéronef et/ou lors de réparations d'étanchéité.

7. Application selon la revendication 6, caractérisée en ce que, lors de réparations d'étanchéité ledit produit est utilisé en combinaison avec un tissu.

**Patentansprüche**

1. Zweikomponenten-Dichtungspräparat, deren erste Komponente durch inniges Mischen eines Epoxidharzes und einer inerten feinpulvrigen Ladung und deren zweite Komponente durch inniges Mischen eines Härtemittels für das Epoxidharz und einer inerten feinpulvrigen Ladung gebildet werden, dadurch gekennzeichnet, daß in den beiden Komponenten die feinpulvrige inerte Ladung aus trockenem Kolloidsiliziumoxid besteht, und/daß in der ersten Komponente der gegenüber dem Epoxidharz gewichtsmäßige Anteil der feinpulvrigen Ladung zwischen 5 und 20% und in der zweiten Komponente der gegenüber dem Härtemittel gewichtsmäßige Anteil der feinpulvrigen Ladung zwischen 3 und 30% liegt.

2. Dichtungspräparat nach Anspruch 1, dadurch gekennzeichnet, daß das Epoxidharz aus Diglyzidyläther des Bisphenols gebildet ist, während das Härtemittel ein modifiziertes Merkaptan ist.

3. Dichtungspräparat nach Anspruch 2, dadurch gekennzeichnet, daß in der ersten Komponente für 25 Gramm Epoxidharz 2,5 Gramm trockenes Kolloidsiliziumoxid und in der zweiten Komponente für 25 Gramm des Härtemittels 1,5 Gramm trockenes Kolloidsiliziumoxid verwendet werden.

4. Dichtungspräparat nach Anspruch 2, dadurch gekennzeichnet, daß in der ersten Komponente für 25 Gramm Epoxidharz 2,5 Gramm trockenes Kolloidsiliziumoxid und in der zweiten Komponente für 25 Gramm Härtemittel 3 Gramm trockenes Kolloidsiliziumoxid verwendet werden.

5. Dichtungspräparat nach einem der Ansprüche 3 oder 4, dadurch gekennzeichnet, daß die erste Komponente darüber hinaus 2 Gramm Weichmacher aufweist.

6. Anwendung des Präparats nach einem der Ansprüche 1 bis 5 zum Abdichten von Kraftstoffbehältern für Flugzeuge, wobei das Abdichten während des Zusammenbaus des Flugzeuges und/oder anläßlich von Dichtungsreparaturen durchgeführt wird.

7. Anwendung nach Anspruch 6, dadurch gekennzeichnet, daß bei Dichtungsreparaturen das Präparat in Kombination mit einem Webstoff oder Gewebe verwendet wird.

**Claims**

1. Sealing product of the type with two components, the first of which is formed by the intimate mixture of an epoxide resin and of an inert pulverulent filler and the second by the intimate mixture of a hardener for said epoxide resin and of an inert pulverulent filler, characterised in that, in the tow components, the inert pulverulent filler is constituted by dry colloidal silica, in that, in first component, the proportion by weight of pulverulent filler with respect to the epoxide resin is between 5 and 20%, and in that, in the second component, the proportion by weight of pulverulent filler, with respect to the hardener, is between 3 and 30%.

2. Sealing product according to Claim 1, characterised in that the epoxide resin is formed by bisphenol diglycidylether, whilst the hardener is a modified mercaptan.

3. Sealing product according to Claim 2, characterised in that the first component comprises 2.5 grams of dry colloidal silica for 25 grams of epoxide resin and in that the second component comprises 1.5 gram of dry colloidal silica for 25 grams of hardener.

4. Sealing product according to Claim 2, characterised in that the first component comprises 2.5 grams of dry colloidal silica for 25 grams of epoxide resin and in that the second component comprises 3 grams of dry colloidal silica for 25 grams of hardener.

5. Sealing product according to either one of Claims 3 or 4, characterised in that the first component comprises, in addition, 2 grams of flexibilizing agent.

6. Application of the product according to any one of Claims 1 to 5 to rendering fuel tanks for aircraft tight, this tightness being effected during construction of said aircraft and/or during seal repairs.

7. Application according to Claim 6, characterised in that, during seal repairs, said product is used in combinaison with a fabric.